# EUROPÄISCHE PATENTSCHRIFT

(11) **EP 2 646 132 B1**
(45) Veröffentlichungstag und Bekanntmachung des Hinweises auf die Patenterteilung: **10.08.2016**
(21) Anmeldenummer: 11763664.7
(22) Anmeldetag: 29.09.2011
(51) Int. Cl.: B01D 29/44, F02M 61/16

(54) **FILTEREINRICHTUNG FÜR EINE FLÜSSIGKEIT**
FILTER DEVICE FOR A LIQUID
ENSEMBLE FILTRANT POUR UN LIQUIDE

(30) Priorität: 29.11.2010 DE 102010062086
(43) Veröffentlichungstag der Anmeldung: 09.10.2013
(73) Patentinhaber: Robert Bosch GmbH, 70442 Stuttgart (DE)
(72) Erfinder: UHLMANN, Dietmar, 71404 Korb (DE); FERRARO, Giovanni, 71642 Ludwigsburg (DE)
(86) Internationale Anmeldenummer: PCT/EP2011/066961
(87) Internationale Veröffentlichungsnummer: WO 2012/072307

(56) Entgegenhaltungen:
- EP-A1- 1 729 006
- DE-B- 1 266 725
- US-A- 5 584 999
- US-A1- 2002 073 967
- US-B1- 6 338 796

## Beschreibung

### Stand der Technik

Die Erfindung betrifft eine Filtereinrichtung für eine Flüssigkeit, insbesondere für Kraftstoff, wobei die Filtereinrichtung einen in einen Durchflusskanal eines Gehäuses eingesetzten Filter aufweist, wobei der Filter einen als Pressbund ausgebildeten Eingangsabschnitt, mindestens eine Zuströmnut und eine Abströmnut aufweist, wobei die Zuströmnut und die Abströmnut über eine in dem Filter gebildete Strömungsverbindung verbunden sind, wobei der der Pressbund eine geschlossene Umfangskontur aufweist, wobei die Zuströmnut den Pressbund durchdringend mit einer einlassseitigen Stirnseite des Filters verschaltet ist und wobei in den Eingangsabschnitt eine als Sacklochbohrung ausgebildete Ausnehmung eingelassen ist, die mit der Zuströmnut verbunden ist.

Eine derartige Filtereinrichtung ist aus der US 6,338,796 B1 bekannt. Diese Filtereinrichtung weist einen als Spaltfilter ausgebildeten Filter auf, der mehrere als Spalte ausgebildete Filterdurchgänge zwischen einer Zuströmnut und einer Abstömnut aufweist. Diese Filterdurchgänge weisen einen Querschnitt auf, der die Maximalgröße von den Filter passierfähigen Partikeln bestimmt. Beispielsweise von einer Fertigung oder Montage herrührende längliche Späne können nicht durch die Filterdurchgänge hindurch strömen, sondern werden herausgefiltert. Auch können andere Schmutzpartikel wie beispielsweise Rost aus dem Tank oder Lackstücke von den Filterdurchgängen zurückgehalten werden. Dies ist vorteilhaft, um die nachfolgenden Einspritzöffnungen eines Kraftstoffinjektors nicht zu verstopfen und einen kostenaufwendigen Austausch beispielsweise des Injektors zu vermeiden.

Eine weitere Filtereinrichtung ist aus der DE 20 2007 002 290 U1 bekannt. Diese Filtereinrichtung weist einen Filter auf, der drei auf dem Umfang des Filters angeordnete Zuströmnuten aufweist, die bis zu dem eingangsseitigen Endbereich des Filters reichen. Diese Zuströmnuten sind durch eine Strömungsverbindung in dem Filter mit einer entsprechenden Anzahl von Abströmnuten verschaltet, die versetzt zu den Zuströmnuten auf dem Außenumfang des Filters angeordnet sind. Zur Positionierung des Filters in einem Durchflusskanal eines Gehäuses weist der Filter einen als Pressbund ausgebildeten Eingangsabschnitt auf. Dieser Pressbund wird von den Zuströmnuten durchbrochen. Dadurch ist die Befestigungsfläche des Filters in dem Durchflusskanal auf dem die Zuströmnuten begrenzenden Stegbereich des Pressbundes beschränkt. Bedingt durch einen hohen Druck der Flüssigkeit, die durch den Filter geleitet wird, neigt ein solcher Filter dazu in dem Durchflusskanal in Richtung zu dessen Auslass oder einen weiterführenden Kanal zu wandern.

Der Erfindung liegt die Aufgabe zu Grunde, eine Filtereinrichtung bereitzustellen, bei der die Positionierung eines Filters in einen Durchflusskanal verbessert ist.

### Offenbarung der Erfindung

### Vorteile der Erfindung

Diese Aufgabe wird dadurch gelöst, dass die Sacklochbohrung eine Tiefe und einen Durchmesser aufweist, die/der eine direkte Verbindung mit der Zuströmnut herstellt. Diese Ausgestaltung vermeidet die die Positionierung beziehungsweise Festlegung des Filters schwächende Ausgestaltung des Pressbundes, indem die Zuströmnut ohne eine Schwächung des Pressbundes durch den Eingangsabschnitt des Filters hindurchgeführt ist. In der allgemeinsten Form kann diese Durchführung in beliebiger Form ausgestaltet sein, wobei wesentlich ist, dass eine geschlossene Umfangskontur des Pressbundes dargestellt ist. Allein durch die geschlossene Umfangskontur wird die zur Verfügung stehenden Pressfläche gegenüber dem Stand der Technik soweit vergrößert, dass eine deutliche Vergrößerung der Haltekräfte und somit eine sichere Positionierung des Filters in dem Durchflusskanal sichergestellt ist. Hinzukommt, dass durch die erfindungsgemäße Ausgestaltung der Druck der in den Filter eingeführten Flüssigkeit eine Flächenpressung in dem Pressbund des Filters auf die Bohrungswandung des Durchflusskanals ausübt, die die Haltekräfte weiter erhöhen.

Der solchermaßen erfindungsgemäß ausgestaltete Filter kann ansonsten beliebig ausgestaltet sein, ist aber bevorzugt als Stabfilter ausgebildet und weist drei auf den Umfang des Filters verteilt angeordnete Zuströmnuten und versetzt dazu angeordnete Abströmnuten auf. Diese Ausgestaltung ermöglicht es, weitgehend auf entsprechende Konstruktionsauslegungen bekannter Stabfilter zurückzugreifen.

Die in den Filter eingelassene Sacklochbohrung kann problemlos in das Filtermaterial eingebracht werden und wie nachfolgend dargestellt mit den Zuströmnuten verbunden werden.

Dadurch, dass die Sacklochbohrung eine Tiefe und einen Durchmesser aufweist, die/der eine direkte Verbindung mit der Zuströmnut herstellt, ist der Vorteil gegeben, dass auf einen bzw. mehrere Kanäle zur Verbindung der Sacklochbohrung mit der Zuströmnut verzichtet werden kann. Bei dieser Ausgestaltung weist die Sacklochbohrung vorzugsweise eine Tiefe von 5,5mm auf, so dass sich eine resultierende Überschneidung von mindestens 0,9mm ergibt. Denkbar ist aber auch bei unveränderter Tiefe der Sacklochbohrung die Länge der Zuströmnut zu verlängern.

In weiterer Ausgestaltung ist der Bohrungsgrund der Sacklochbohrung kegelförmig mit einem Kegelwinkel größer als 70°, vorzugsweise größer/gleich 90° ausgebildet. Ein solcher Kegelwinkel ist einerseits bezüglich des einzusetzenden Werkzeugs günstig, anderseits bezüglich der Anbindung des Einlasses an die Sacklochbohrung vorteilhaft.

In Weiterbildung der Erfindung weist die Sacklochbohrung einen Durchmesser von 2,75mm und eine Tiefe von 4,6mm auf. Diese Maße, die selbstverständlich im Rahmen der Erfindung entsprechend den Anforderungen und Gegebenheiten variiert werden können, haben sich für die meisten Standartanwendungen als besonders vorteilhaft erwiesen.

In weiterer Ausgestaltung der Erfindung ist die Filtereinrichtung in einem Common-Rail-Kraftstoffinjektor eines Kraftstoffeinspritzsystems einer Brennkraftmaschine verbaut. Dieser Einbau ist die bevorzugte Anwendung der Erfindung.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Kurze Beschreibung der Zeichnungen

Es zeigen:
- Figur 1: einen Schnitt durch den Anschlussbereich eines Kraftstoffinjektors mit einem Durchflusskanal, in den ein erfindungsgemäßer Stabfilter eingesetzt ist,
- Figur 2: eine Seitenansicht eines erfindungsgemäßen Stabfilters,
- Figur 2a: einen Schnitt durch den Stabfilter gemäß Figur 3,
- Figur 3: eine vergrößerte Darstellung einer Draufsicht auf einen Stabfilter gemäß Figur 2,
- Figur 4: eine vergrößerte Schnittdarstellung eines Stabfilters in einem Eingangsabschnitt eines Stabfilters,
- Figur 5: eine Schnittdarstellung B-B gemäß Figur 2,
- Figur 6: eine Seitenansicht einer Ausführungsvariante eines erfindungsgemäßen Stabfilters,
- Figur 6a: einen Schnitt durch den Stabfilter gemäß Figur 7,
- Figur 7: eine vergrößerte Darstellung einer Draufsicht auf einen Stabfilter gemäß Figur 6,
- Figur 8: eine vergrößerte Schnittdarstellung eines Stabfilters in einem Eingangsabschnitt eines Stabfilters, und
- Figur 9: eine Schnittdarstellung B-B gemäß Figur 6.

### Kurze Beschreibung der Zeichnungen

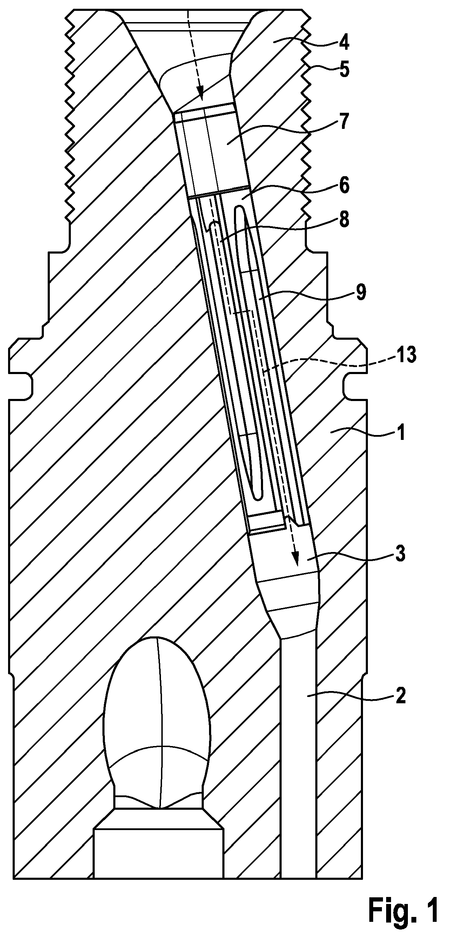

Figur 1 zeigt den Anschlussbereich 1 eines Kraftstoffinjektors zum Anschluss einer Hochdruckleitung an den Kraftstoffinjektor, der für ein Common-Rail-Einspritzsystem einer insbesondere selbstzündenden Brennkraftmaschine ausgelegt ist. Dem Kraftstoffinjektor wird aus einem Hochdruckspeicher Kraftstoff unter einem Druck von bis zu 3000bar zugeführt, wobei der Kraftstoff von dem Kraftstoffinjektor in einen zugeordneten Brennraum der Brennkraftmaschine gesteuert eingespritzt wird. Der Anschlussbereich 1 weist eine Hochdruckbohrung 2 auf, die mit dem Düsenkörper und dem Schaltventil des Kraftstoffinjektors in einer bekannten Art und Weise verschaltet ist. Die Hochdruckbohrung 2 ist mit einem Durchflusskanal 3 in dem Anschlussbereich 1 verschaltet, der in eine Anschlussstutzen 4 des Anschlussbereichs 1 ausläuft. Der Anschlussstutzen 4 weist ein Außengewinde 5 zum Aufdrehen einer mit der Hochdruckleitung verbundenen Überwurfmutter auf.

In den Durchflusskanal 3 ist ein Stabfilter 6, der in den nachfolgenden Figuren in verschiedenen Ausführungsformen detailliert beschrieben ist, eingesetzt, wobei der Stabfilter 6 einen als Pressbund 7 ausgebildeten Eingangabschnitt aufweist, mit dem der Stabfilter 6 in dem Durchflusskanal 3 unverrückbar positioniert ist. Der Stabfilter 6 weist weiterhin drei auf dem Umfang verteilt angeordnete Zuströmnuten 8 auf, die über den Filter gebildete Strömungsverbindungen mit Abströmnuten 9 in Verbindung stehen. Der über den Anschlussstutzen 4 zugeführte Kraftstoff strömt entlang der strichlinierten Darstellung 13 durch den Stabfilter 6 in die Hochdruckbohrung 2.

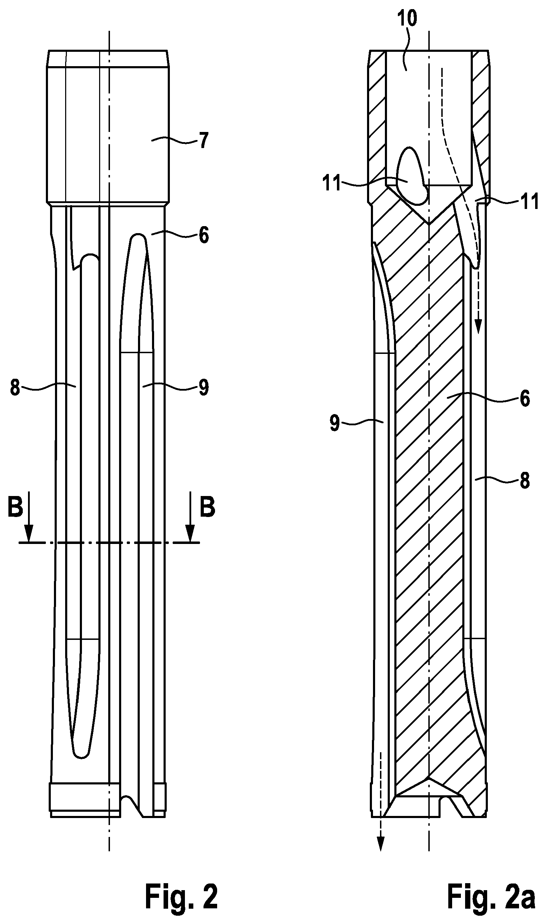

In Figur 2 ist der Stabfilter 6 in einer vergrößerten Darstellung wiedergegeben: Der Stabfilter 6 weist beispielsweise eine Gesamtlänge von 23mm auf, wobei der Pressbund 7 eine Länge von ca. 4mm aufweist.

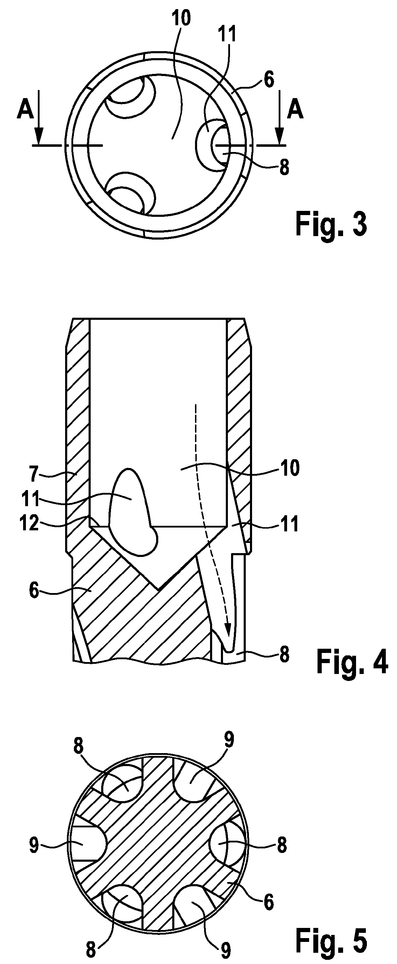

Die in den Figuren 2, 2a, 3, 4 und 5 dargestellte und nachfolgend beschriebene Ausführungsform gehört nicht zum Schutzumfang des Patents. Figur 2a zeigt einen Schnittdarstellung durch einen Stabfilter 6 gemäß Figur 2, wobei hier zusätzlich eine Sacklochbohrung 10 in dem Pressbund 7 sichtbar ist. Durch die Sacklochbohrung 10 gelangt der über den Anschlussstutzen 4 zugeführte Kraftstoff in den Stabfilter 6 und von der Sacklochbohrung 10 zweigen drei Kanäle 11 ab, die die Sacklochbohrung 10 mit den drei Zuströmnuten 8 verbinden. Die Sacklochbohrung 10, die Zuströmnuten 8 und die Kanäle 11 sind detailliert in den Figuren 3, 4 und 5 dargestellt.

Die wiederum vergrößerte dargestellte Draufsicht auf den Stabfilter gemäß Figur 3 zeigt die Sacklochbohrung 10, die davon abzweigenden Kanäle 11 und die Einmündung in die Zuströmnuten 8. Weiterhin ist die Lage des in der Figur 2a dargestellten Schnitts A - A angegeben.

Figur 4 zeigt eine entsprechend Figur 3 vergrößerte Schnittdarstellung durch den Stabfilter 6 im Bereich des Pressbundes 7 mit der eingelassenen Sacklochbohrung 10. Der Pressbund weist einen Außendurchmesser von 3,3557 mm zur unverrückbaren Festlegung in dem Durchflusskanal 3 mit einem Durchmesser von 3,5 mm auf. Die Sacklochbohrung 10 weist einen Durchmesser von 2,75 mm und eine Länge von 4,6mm bis zu einem Bohrungsgrund 12 auf. Der Bohrungsgrund 12 ist kegelförmig ausgebildet und weist einen Kegelwinkel von 90° auf. Der Kanal 11 ist mit einem Durchmesser von 1,0 mm unter einem Winkel von 12° zu der Längsachse des Stabfilters 6 geneigt und durchdringt einen Teilbereich des Bohrungsgrundes 12 sowie der Seitenwandung der Sacklochbohrung 10 zur Verbindung der Sacklochbohrung 10 mit der Zuströmnut 8.

In den in Figur 5 dargestellten Schnitt B-B ist die symmetrisch verteilte Lage der Zuströmnuten 8 und der Abströmnuten 9 in dem Stabfilter 6 dargestellt.

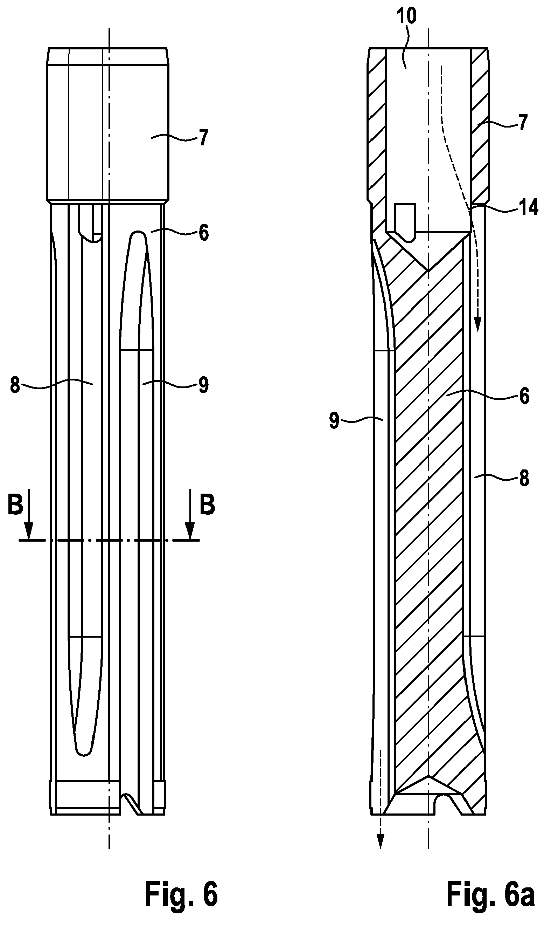

In Figur 6 ist der Stabfilter 6 in einer alternativen Ausführungsform wiedergegeben. Auch dieser Stabfilter 6 weist beispielsweise wieder eine Gesamtlänge von 23mm auf, wobei der Pressbund 7 eine Länge von ca. 4mm aufweist.

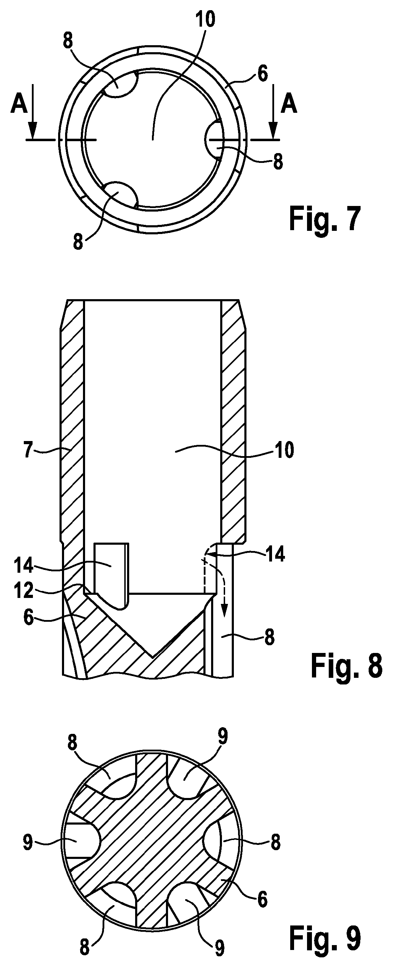

Figur 6a zeigt einen Schnittdarstellung durch den Stabfilter 6 gemäß Figur 6, wobei hier zusätzlich eine Sacklochbohrung 10 in dem Pressbund 7 sichtbar ist. Durch die Sacklochbohrung 10 gelangt der über den Anschlussstutzen 4 zugeführte Kraftstoff in den Stabfilter 6 und mit der Sacklochbohrung 10 sind die drei Zuströmnuten 8 direkt verbunden. Dazu ist die Sacklochbohrung 10 bei dieser Ausführung mit einer Länge von 5,5mm gefertigt und weist folglich mit der Sacklochbohrung 10 eine Überschneidung 14 mit einer Überschneidungslänge von 0,9mm auf. Die Sacklochbohrung 10 und die Zuströmnuten 8 mit der Überschneidung 14 sind detailliert in den Figuren 7, 8 und 9 dargestellt.

Die wiederum vergrößerte dargestellte Draufsicht auf den Stabfilter gemäß Figur 7 zeigt die Sacklochbohrung 10 und es ist die Lage des in der Figur 6a dargestellten Schnitts A - A angegeben.

Figur 8 zeigt eine entsprechend Figur 7 vergrößerte Schnittdarstellung durch den Stabfilter 6 im Bereich des Pressbundes 7 mit der eingelassenen Sacklochbohrung 10. Auch hier weist der Pressbund einen Außendurchmesser von 3,3557mm zur unverrückbaren Festlegung in dem Durchflusskanal 3 mit einem Durchmesser von 3,5mm auf. Die Sacklochbohrung 10 weist einen Durchmesser von 2,75mm und eine Länge von 4,6mm bis zu einem Bohrungsgrund 12 auf. Der Bohrungsgrund 12 ist kegelförmig ausgebildet und weist einen Kegelwinkel von 90° auf. Die Zuströmnut 8 ist bei dieser Ausführungsform länger ausgebildet und weist mit der Sacklochbohrung 10 die angegebene Überschneidung 14 auf.

In den im Figur 9 dargestellten Schnitt B-B ist wiederum die symmetrisch verteilte Lage der Zuströmnuten 8 und der Abströmnuten 9 in dem Stabfilter 6 dargestellt.

## Patentansprüche

1. Filtereinrichtung für eine Flüssigkeit, insbesondere für Kraftstoff, wobei die Filtereinrichtung einen in einen Durchflusskanal (3) eines Gehäuses eingesetzten Filter aufweist, wobei der Filter einen als Pressbund (7) ausgebildeten Eingangsabschnitt, mindestens eine Zuströmnut (8), und eine Abströmnut (9) aufweist, wobei die Zuströmnut (8) und die Abströmnut (9) über eine in dem Filter gebildete Strömungsverbindung verbunden sind, wobei der der Pressbund (7) eine geschlossene Umfangskontur aufweist, wobei die Zuströmnut (8) den Pressbund (7) durchdringend mit einer einlassseitigen Stirnseite des Filters verschaltet ist und wobei in den Eingangsabschnitt eine als Sacklochbohrung (10) ausgebildete Ausnehmung eingelassen ist, die mit der Zuströmnut (8) verbunden ist,
**dadurch gekennzeichnet, dass** die Sacklochbohrung (10) eine Tiefe und einen Durchmesser aufweist, die/der eine direkte Verbindung mit der Zuströmnut (8) herstellt.

2. Filtereinrichtung nach Anspruch 1,
**dadurch gekennzeichnet, dass** die Überschneidungslänge der Überschneidung (14) zwischen der Sacklochbohrung (10) und der Zuströmnut (8) 0,9mm beträgt.

3. Filtereinrichtung nach Anspruch 1 oder 2,
**dadurch gekennzeichnet, dass** ein Bohrungsgrund (12) der Sacklochbohrung (10) kegelförmig mit einem Kegelwinkel größer als 70°, vorzugsweise größer/gleich 90° ausgebildet ist.

4. Filtereinrichtung nach Anspruch 3,
**dadurch gekennzeichnet, dass** die Sacklochbohrung (10) einen Durchmesser von 2,75mm und eine Tiefe von 4,6mm aufweist.

5. Common-Rail-Kraftstoffinjektor eines Kraftstoffeinspritzsystems einer Brennkraftmaschine mit einer Filtereinrichtung nach einem der Ansprüche 1 bis 4.

## Claims

1. Filter device for a liquid, in particular for fuel, wherein the filter device has a filter which is inserted into a throughflow duct (3) of a housing, wherein the filter has an inlet section in the form of a press-in collar (7), at least one inflow groove (8), and an outflow groove (9), wherein the inflow groove (8) and the outflow groove (9) are connected by way of a flow connection formed in the filter, wherein the press-in collar (7) has a closed circumferential contour, wherein the inflow groove (8) is connected, through the press-in collar (7), to an inlet-side face side of the filter, and wherein there is formed into the inlet section a recess in the form of a blind bore (10) which is connected to the inflow groove (8), **characterized in that** the blind bore (10) has a depth and a diameter which produce a direct connection to the inflow groove (8).

2. Filter device according to Claim 1,
**characterized in that** the intersection length of the intersection (14) between the blind bore (10) and the inflow groove (8) is 0.9 mm.

3. Filter device according to Claim 1 or 2,
**characterized in that** a bore base (12) of the blind bore (10) is of conical form with a cone angle greater than 70°, preferably greater than or equal to 90°.

4. Filter device according to Claim 3,
**characterized in that** the blind bore (10) has a diameter of 2.75 mm and a depth of 4.6 mm.

5. Common-rail fuel injector of a fuel injection system of an internal combustion engine, having a filter device according to one of Claims 1 to 4.

## Revendications

1. Dispositif de filtration pour un liquide, en particulier pour carburant, dans lequel le dispositif de filtration présente un filtre inséré dans un canal d'écoulement (3) d'un boîtier, le filtre présentant une portion d'entrée réalisée sous forme d'épaulement de pressage (7), au moins une rainure d'alimentation (8) et une rainure d'évacuation (9), la rainure d'alimentation (8) et la rainure d'évacuation (9) étant connectées par le biais d'une connexion fluidique formée dans le filtre, l'épaulement de pressage (7) présentant un contour périphérique fermé, la rainure d'alimentation (8) étant mise en communication en traversant l'épaulement de pressage (7) avec un côté frontal du côté de l'entrée du filtre et un évidement réalisé sous forme d'alésage de trou borgne (10) étant pratiqué dans la portion d'entrée, lequel est connecté à la rainure d'alimentation (8),
**caractérisé en ce que** l'alésage de trou borgne (10) présente une profondeur et un diamètre qui établissent une liaison directe avec la rainure d'alimentation (8).

2. Dispositif de filtration selon la revendication 1,
**caractérisé en ce que** la longueur de recoupement du recoupement (14) entre l'alésage de trou borgne (10) et la rainure d'alimentation (8) est de 0,9 mm.

3. Dispositif de filtration selon la revendication 1 ou 2,
**caractérisé en ce qu'**une base d'alésage (12) de l'alésage de trou borgne (10) est réalisée sous forme conique avec un angle de conicité supérieur à 70°, de préférence supérieur ou égal à 90°.

4. Dispositif de filtration selon la revendication 3,
**caractérisé en ce que** l'alésage de trou borgne (10) présente un diamètre de 2,75 mm et une profondeur de 4,6 mm.

5. Injecteur de carburant à rampe commune d'un système d'injection de carburant d'un moteur à combustion interne comprenant un dispositif de filtration selon l'une quelconque des revendications 1 à 4.
